# EUROPÄISCHE PATENTSCHRIFT

(11) **EP 2 368 748 B1**
(45) Veröffentlichungstag und Bekanntmachung des Hinweises auf die Patenterteilung: **01.11.2017**
(21) Anmeldenummer: 11004364.3
(22) Anmeldetag: 27.01.2007
(51) Int. Cl.: B60L 5/00, H02J 5/00

(54) **Anlage und Verfahren zur berührungslosen Energieübertragung**
Assembly and method for contactless power supply
Installation et procédé d'alimentation sans contact

(30) Priorität: 02.03.2006 DE 102006010256
(43) Veröffentlichungstag der Anmeldung: 28.09.2011
(62) Teilanmeldung aus: 07711392.6
(73) Patentinhaber: SEW-EURODRIVE GmbH & Co. KG, 76646 Bruchsal (DE)
(72) Erfinder: Schmidt, Josef, 76676 Graben-Neudorf (DE); Treier, Christian, 76877 Offenbach an der Queich (DE); Wolf, Harald, 76698 Ubstadt-Weiher (DE)
(74) Vertreter: Tüngler, Eberhard

(56) Entgegenhaltungen:
- EP-A1- 1 744 443
- DE-B3- 10 349 242
- JP-A- 2002 067 747
- JP-A- 2005 313 884

## Beschreibung

Die Erfindung betrifft eine Anlage und ein Verfahren.

Aus der JP 2002067747 ist ein System zur berührungslosen Energieübertragung bekannt, bei dem mehrere Streckenabschnitte von verschiedenen Einspeisungen synchronisiert gespeist werden. Dabei wird ein clock Signal, also Taktsignal, von einem Master- an einen Slave-Streckenabschnitt übermittelt, wobei Licht verwendet wird. Nachteilig ist dabei, dass die Phasenlage von Strömen bestimmt werden muss, insbesondere in aufwendiger Weise mit Strom-Sensoren.

Aus der EP 1 744 443 A1 ist eine berührungslose Versorgung von Fahrzeugen in einer industriellen Anlage bekannt.

Aus der JP 2005 313884 A ist ebenfalls eine berührungslose Versorgung von Fahrzeugen in einer industriellen Anlage bekannt.

Aus der DE 103 49 242 B3 ist ein Verfahren zur berührungslosen Übertragung elektrischer Leistung und Information bekannt, wobei Synchronisationspulse gesendet werden, wenn der Primärleiterstrom verschwindet.

Aus der JP 2002 067747 A ist eine Anlage gezeigt, bei welcher Fahrzeugen elektrische Energie zugeführt wird in der Zeit des Transfers zwischen elektrifizierten Schienenabschnitten.

Der Erfindung liegt daher die Aufgabe zugrunde, ein solches System weiterzubilden, wobei eine möglichst einfache und kostengünstige Synchronisierung erreichbar sein soll.

Erfindungsgemäß wird die Aufgabe bei der Anlage nach den in Anspruch 1 oder 2 und bei dem Verfahren nach den in Anspruch 11 angegebenen Merkmalen gelöst.

Wesentliche Merkmale der Erfindung bei der Anlage nach Anspruch 1 sind, dass sie Streckenabschnitte umfasst,
wobei jeder Streckenabschnitt eine Versorgungsleitung umfasst, in die ein mittelfrequenter Strom von einer dem jeweiligen Streckenabschnitt zugeordneten Einspeisung einspeisbar ist,
wobei jede Einspeisung eine Steuerschaltung umfasst,
wobei eine erste der Steuerschaltungen, insbesondere Master, ein Taktsignal zum Synchronisieren der weiteren Einspeisungen an diese, insbesondere Slave, übermittelt.

Von Vorteil ist dabei, dass die Ströme der Streckenabschnitte synchronisierbar sind ohne , dass ein Stromwert erfasst werden muss und ohne dass die Phasenlage eines Stromes bestimmt werden muss. Es genügt also bei der Erfindung, im digitalen Teil der Umrichter Synchronisierung zu erreichen und die vorteilhaften Eigenschaften von Gyratoren zu Nutze zu machen, nämlich die Unabhängigkeit der Phasenverschiebung zwischen Eingangsspannung und Ausgangsstrom von der Last.

**Erfindungsgemäß** wird abhängig von der Phasenabweichung des Taktsignals der ersten Einspeisung zum Pulsweitenmodulationssignal die Periodendauer des zeitlichen Verlaufs eines Zählerinhaltes verändert. Von Vorteil ist dabei, dass in einfacher und kostengünstiger Weise eine Synchronisierung erreichbar ist.

Alternativ umfasst die nach Anspruch 2 erfindungsgemäße Anlage zumindest einen Streckenabschnitt,
wobei der Streckenabschnitt eine Versorgungsleitung umfasst, in den ein mittelfrequenter Strom von mindestens zwei Einspeisungen einspeisbar ist,
**wobei** jede Einspeisung eine Steuerschaltung umfasst,
wobei eine erste der Steuerschaltungen, insbesondere Master, ein Taktsignal zum Synchronisieren der weiteren Einspeisungen an diese, insbesondere Slave, übermittelt.

Von Vorteil ist dabei, dass Einspeisungen parallel schaltbar sind, ohne sich gegenseitig zu stören.

Bei einer vorteilhaften Ausgestaltung ist die Steuerschaltung als digitales System ausgeführt. Von Vorteil ist dabei, dass die Synchronisierung der Ausgangsströme der Einspeisungen erreichbar ist, indem die digitalen Teile der Einspeisungen synchronisiert werden. Beispielsweise ist also die Ansteuerelektronik für die Endstufe eines Umrichters, insbesondere Zwischenkreisspannungsumrichters, synchronisiert betreibbar.

Bei einer vorteilhaften Ausgestaltung basiert die Synchronisierung nur auf Informationen, die im digitalen Teil der Einspeisung vorhanden sind. Von Vorteil ist dabei, dass die nachfolgenden elektronischen Bauteile derart ausführbar sind, dass trotz der komplexen Schaltungstechnik die Ausgangsströme synchronisierbar sind.

Bei einer vorteilhaften Ausgestaltung umfasst die Einspeisung eine pulsweitenmodulierbar betreibbare mittelfrequente Spannungsquelle, deren Ausgangsspannung einem Spannungs-Strom-Wandler, insbesondere Gyrator, zuführbar ist, dessen Ausgangsstrom in die Versorgungsleitung einspeisbar ist. Von Vorteil ist dabei, dass ein Umrichter zur Realisierung einer mittelfrequenten Spannungsquelle verwendbar ist. Durch bloßes Umwandeln der Spannungsquelle in eine Stromquelle mit passiven Elementen ist somit die Stromquelle realisierbar. Da die Synchronisierung im digitalen teil der Umrichter vorgenommen wurde, muss keine Stromerfassung zum Zwecke der Synchronisierung eingesetzt werden. Somit wird eine besonders einfache und kostengünstige Synchronisierung erreicht.

Bei einer vorteilhaften Ausgestaltung ist Spannungs-Strom-Wandler und/oder die Induktivität der Versorgungsleitung mit zugeordneten Kapazitäten im Wesentlichen in Resonanz abgestimmt auf die Mittelfrequenz. Von Vorteil ist dabei, dass die Phasenverschiebung konstant ist und unabhängig von den angeschlossenen Verbrauchern.

Bei einer vorteilhaften Ausgestaltung sind Verbraucher aus der Versorgungsleitung induktiv versorgbar, insbesondere die Verbraucher eine Sekundärspule umfassen, die induktiv an die als Primärleiter ausgeführte Versorgungsleitung ankoppelbar ist, insbesondere wobei der Sekundärspule eine Kapazität in Serie oder parallel derart geschaltet ist, die Resonanzfrequenz im Wesentlichen der Mittelfrequenz gleicht. Von Vorteil ist dabei, dass die Verbraucher berührungslos versorgbar sind.

Bei einer vorteilhaften Ausgestaltung ist die Steuerschaltung zum Erzeugen der pulsweitenmodulierten Ansteuersignale der Endstufe vorgesehen. Von Vorteil ist dabei, dass bekannte Umrichter nur wenig modifiziert werden müssen.

Bei einer vorteilhaften Ausgestaltung umfasst die Steuerschaltung jeder weiteren Einspeisung Mittel zum Variieren der Pulsweitenmodulationsperiode, wobei die Periodendauer abhängig von der Phasenabweichung des Taktsignals der ersten Einspeisung zum Pulsweitenmodulationssignal verändert wird. Von Vorteil ist dabei, dass in einfacher und kostengünstiger Weise eine Synchronisierung erreichbar ist.

Bei einer vorteilhaften Ausgestaltung liegt der Änderungsbetrag der Pulsweitenmodulationsperiode pro Periode betragsmäßig unterhalb eines Wertes liegt, insbesondere zum Begrenzen der Frequenzabweichung von der Taktsignalfrequenz. Von Vorteil ist dabei, dass die Frequenz nicht sprunghafte Änderungen erfährt und somit große Frequenzabweichungen vermieden werden.

Bei einer vorteilhaften Ausgestaltung wird abhängig von der Phasenabweichung des Taktsignals der ersten Einspeisung zum Pulsweitenmodulationssignal die Ausgangsfrequenz einer Oszillatorschaltung der weiteren Einspeisung geändert, insbesondere zum Ändern der Grundtaktfrequenz für einen Mikrocontroller der weiteren Einspeisung. Von Vorteil ist dabei, dass in einfacher und kostengünstiger Weise eine Synchronisierung erreichbar ist.

Bei einer vorteilhaften Ausgestaltung wird das Taktsignal übermittelt Bussystem, insbesondere Feldbussystem und/oder Ethernet, übermittelt. Von Vorteil ist dabei, dass bekannte Bussystem einsetzbar sind.

Bei einer vorteilhaften Ausgestaltung sind mittels des Bussystems über das Taktsignal hinaus weitere Daten übertragbar. Von Vorteil ist dabei, dass weitere Sicherheits- oder Steuerungsdaten übertragbar sind.

Wichtige Merkmale bei dem Verfahren zum Betreiben einer Anlage sind, dass eine erste Einspeisung weiteren Einspeisungen ein Taktsignal übermittelt,
wobei das Taktsignal in der ersten Einspeisung derart erzeugt wird, das synchron ist zu Ansteuersignalen einer Endstufe, insbesondere einer elektronische Leistungshalbleiter umfassenden Endstufe zur Erzeugung einer Ausgangsspannung. Von Vorteil ist dabei, dass im digitalen Teil die Synchronisierung erreichbar ist.

Bei einer vorteilhaften Ausgestaltung werden das Taktsignal und die Schaltzeitpunkte der Ansteuersignale von demselben digitalen zeitbestimmenden Mittel, insbesondere Zähler, abgeleitet. Von Vorteil ist dabei, dass die Ausführung in einfacher und kostengünstiger Software möglich ist.

Bei einer vorteilhaften Ausgestaltung führen die weiteren Einspeisungen die Erzeugung von pulsweitenmodulierten Ansteuersignalen derart aus, dass eine Synchronisierung der Ansteuersignale, insbesondere Pulsweitenmodulationssignale, zum Taktsignal erreicht wird. Von Vorteil ist dabei, dass die Ansteuersignale, beispielsweise die PWM-Ansteuersignale, synchron ausführbar sind ohne besonderen zusätzlichen Aufwand.

Bei einer vorteilhaften Ausgestaltung wird zum Erreichen der Synchronisierung ein Regler verwendet. Insbesondere wird dem Regler eine Phasendifferenz zugeführt. Von Vorteil ist dabei, dass aus der Phasendifferenz als Regelabweichung die Periodendauer eines Taktgebers, wie Oszillatorschaltung oder Timer, veränderbar ist und somit die Synchronisierung erreichbar ist. Der Taktgeber ist in Software und/oder Hardware realisierbar.

Bei einer vorteilhaften Ausgestaltung wird vom Ausgang des Reglers die Pulsweitenmodulationsperiodendauer, also PWM-Periodendauer, beeinflusst. Von Vorteil ist dabei, dass geringfügige Einflussnahme auf die PWM-Periodendauer genügt, um die Synchronisierung zu erreichen.

Bei einer vorteilhaften Ausgestaltung wird die jeweilige Phasendifferenz aus der Phase des jeweiligen Pulsweitenmodulationssignals und des Taktsignals bestimmt. Von Vorteil ist dabei, dass zur Bestimmung der Phase beispielsweise Flanken der Signale und/oder ein Vergleich mit charakteristischen Werten herangezogen werden können und somit in einfacher, aber sehr genauer Weise eine Bestimmung der Phasendifferenz ausführbar ist.

Bei einer vorteilhaften Ausgestaltung wird die Frequenzänderung oder Periodendaueränderung durch den Regler nur mit einer begrenzten maximalen Rate ausgeführt. Von Vorteil ist dabei, dass die Frequenz des Slaves im Wesentlichen ungeändert bleibt. Die kleinen geringfügigen Frequenzverstimmungen ändern die Frequenz nur unwesentlich, reichen aber zur Anpassung der Phase und auch Frequenz aus.

Weitere Vorteile ergeben sich aus den Unteransprüchen.

Die Erfindung wird nun anhand von Abbildungen näher erläutert:

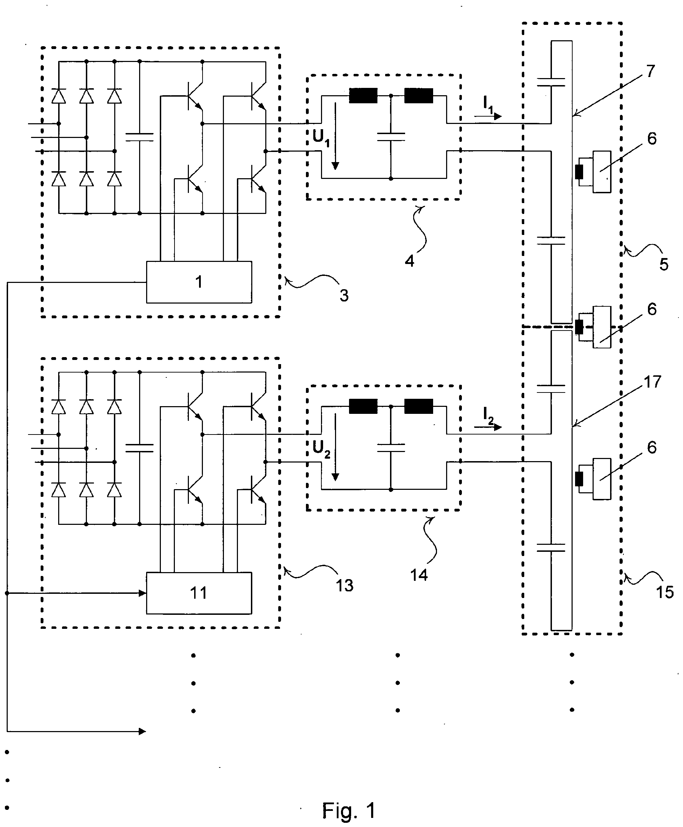

In der Figur 1 ist eine erfindungsgemäße Anlage schematisch gezeichnet. Dabei sind die induktiv versorgbaren Verbraucher 6 entlang eines Primärleiters bewegbar. Es ist außerdem ein erster Streckenabschnitt 5 gezeigt, dessen Primärleiter 7 aus dem Spannungszwischenkreisumrichter 3 über den Spannungs-Strom-Wandler 4 versorgbar ist. Der Spannungszwischenkreisumrichter 3 ist als mittelfrequente Spannungsquelle vorsehbar, insbesondere mit einer Ausgangsfrequenz zwischen 1 und 100 kHz .

Der Spannungszwischenkreisumrichter 3 umfasst einen vom Netz versorgten Gleichrichter, dem ein Kondensator, also der Zwischenkreiskondensator, nachgeschaltet ist, aus dem die Endstufe, insbesondere ein Wechselrichter, versorgbar ist.

Der Wechselrichter speist den Spannungs-Strom-Wandler 4, der hier als sogenannter Gyrator ausgeführt ist. Wesentlich ist dabei, dass das Spannungsquellen-Verhalten des Umrichters 3 in ein Stromquellen-Verhalten am Ausgang des Spannungs-Strom-Wandlers 4 überführt wird. Am Spannungs-Strom-Wandler 4 ist die Amplitude seines Ausgangswechselstroms proportional zur Amplitude seiner Eingangswechselspannung unabhängig von den Verbrauchern.

Somit ist in den Primärleiter des ersten Streckenabschnittes 5 ein Strom einspeisbar, wobei zur Anpassung der Resonanzfrequenz der Induktivität des Primärleiters und Kondensatoren an die Mittelfrequenz letztere im Streckenabschnitt 5 vorgesehen sind.

Der zweite Streckenabschnitt 15 umfasst wiederum einen Primärleiter 17, welcher in gleicher Art über den Spannungs-Strom-Wandler 14 aus dem Umrichter 13 versorgbar ist, der vom Netz versorgbar ist, insbesondere Drehstrom-Versorgungs-Netz.

Damit die Verbraucher 6 beim Übergang vom ersten Streckenabschnitt 5 zum zweiten Streckenabschnitt 15 kontinuierlich versorgbar sind, müssen die Ströme der Primärleiter (7,17) zueinander synchron sein, also in Frequenz und Phasenlage möglichst genau übereinstimmen.

Wichtig ist nun bei der vorliegenden Erfindung, dass die Synchronisierung dadurch erreicht wird, dass die Steuerschaltung 1 des ersten Umrichters 3 und die Steuerschaltung 11 des weiteren Umrichters 13 und gegebenenfalls weitere Steuerschaltungen 11 von weiteren Umrichtern synchronisiert werden.

Hierzu ist eine Leitung 2 zur Übermittelung eines Taktsignals vorgesehen. Das Taktsignal wird von der ersten Steuerschaltung 1 erzeugt und an alle weiteren Steuerschaltungen 11 übermittelt.

Bei weiteren erfindungsgemäßen Ausführungsbeispielen ist die Übermittelung mittels eines Bussystems vorsehbar, das beispielsweise als Feldbus, wie CAN-Bus, Profibus oder Interbus, ausführbar ist.

Die weiteren Steuerschaltungen 11 bei Figur 1 sind derart ausgeführt, dass die Ausgangsspannungen der Umrichter (3, 13) synchron verlaufen und somit auch der zum jeweiligen Streckenabschnitt gehörende Strom im Primärleiter synchron ist.

Denn die Spannungs-Strom-Wandler sind derart ausgeführt, dass die Phasenverschiebung, also relative Phasenlage, der Eingangsspannung zum Ausgangsstrom konstant und unabhängig von der Last, also Verbrauchern, ist.

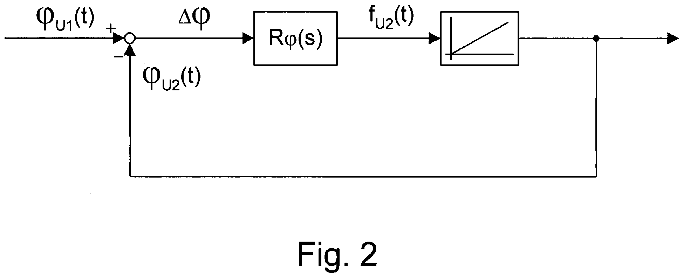

In Figur 2 sind die Mittel zum Herstellen der Synchronisierung näher dargestellt. Dabei ist das von der Steuerschaltung 1 stammende Taktsignal zur Ausgangsspannung U₁ des Umrichters 3 synchron.

Die zugehörige Information über Phasenlage ist in Figur 2 mit *ϕ*_{*U*1}(*t*) bezeichnet und wird als Sollwert mit dem Istwert, nämlich der Phasenlage *ϕ*_{*U*2}(*t*) der Ausgangsspannung U₂ des Umrichters 13, verglichen. Die Regelabweichung Δ*ϕ* wird dem Regler *Rϕ*(*s*) zugeführt, der die Frequenz f_{U2}(t) der mittelfrequenten Ausgangsspannung U₂ erzeugt. Die Phasenlage *ϕ*_{*U*2}(*t*) ergibt sich durch Integration dieser Frequenz f_{U2}(t).

Durch die in Figur 2 beschriebene Regelstruktur des Umrichters 13 wird also die Phasenlage der Ausgangsspannungen der Umrichter (3, 13) synchronisiert. Somit sind nicht nur die Frequenzen sondern auch die Phasen der Ausgangsspannungen synchron. Daraus ergibt sich dann auch, dass die Ströme der Primärleiter synchron sind.

Denn die Spannungs-Strom-Wandler (4,14) sind auf die Mittelfrequenz abgestimmt. Insbesondere bei Ausführung der Wandler als Gyrator oder äquivalente Schaltungsart sind die Induktivitäten und Kapazitäten derart bemessen, dass die Resonanzfrequenz dieses Gyrators oder der äquivalenten Schaltungsart der Mittelfrequenz entspricht oder zumindest im Wesentlichen entspricht.

Bei weiteren erfindungsgemäßen Ausführungsbeispielen sind auch über das Taktsignal hinaus weitere Daten über die Leitung 2, insbesondere Bussystem, übertragbar.

Bei weiteren erfindungsgemäßen Ausführungsbeispielen ist als Regler ein P-Regler, ein PI-Regler oder ein PID-Regler verwendbar. Es sind auch weitere bekannte Regler vorteilhaft.

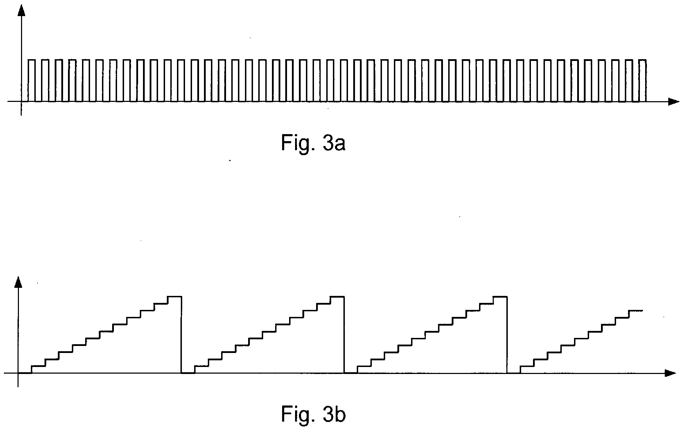

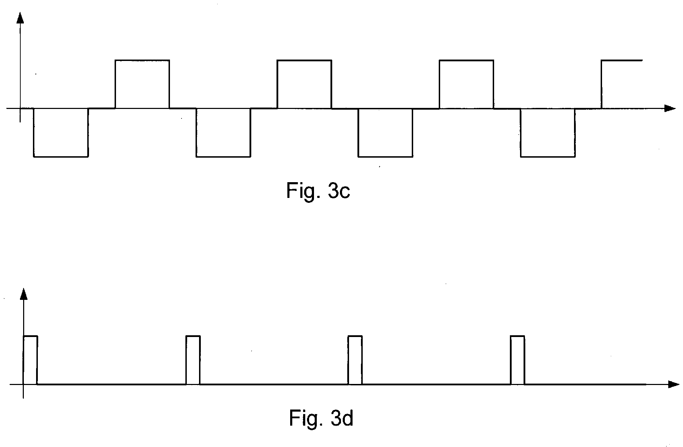

Ein weiteres erfindungsgemäßes Ausführungsbeispiel ist in Figur 3a bis 3d gezeigt. Dabei ist die Ausführung zeitdiskret. Die Steuerschaltung umfasst einen Oszillator, der ein Grundtaktsignal erzeugt, wie in Figur 3a dargestellt. Beispielsweise ist die Erzeugung mittels einer einen Quarz umfassenden Oszillatorschaltung ausgeführt. Daraus wird ein in Figur 3b bildlich dargestellter Zählerinhalt generiert, der mittels Komparatoren mit vier vorgebbaren Werten verglichen wird. Aus den vier Vergleichsergebnissen werden die Schaltzeitpunkte für die Endstufe bestimmt und somit die Ausgangsspannung U1 erzeugt, die in Figur 3c dargestellt ist. Durch einen weiteren Vergleich mit einem weiteren Wert wird das Taktsignal nach Figur 3d erzeugt, das somit synchron zum zeitlichen Verlauf des Zählerinhalts nach Figur 3b ist und auch eine gleiche Phasenlage aufweist.

Der Umrichter 13 weist ebenfalls eine Oszillatorschaltung auf, taktet einen Zähler und generiert somit wiederum einen zeitlichen Verlauf eines Zählerinhaltes. Je nach Phasenlage des Taktsignals zum zeitlichen Verlauf des Zählerinhaltes wird die folgende Periodendauer verlängert oder verkürzt.

Hierzu wird in der auf die Flanke des Taktsignals folgenden Periode die Periodendauer oder der Überlaufwert des Zählers um eins verlängert oder verkürzt. Auf diese Weise folgt die Phasenlage des Slave-Umrichters mit begrenzter Änderungsgeschwindigkeit der Phasenlage der Ausgangsspannung des Umrichters 3, also des Masters.

Bei weiteren erfindungsgemäßen Ausführungsbeispielen wird die Oszillatorschaltung als VCO-Schaltung ausgeführt. Dies bedeutet, dass die Frequenz der Oszillatorschaltung verstimmbar ist abhängig von einer anzulegenden Signalspannung. Somit ist der Umrichter 13 nur derart auszuführen, dass der Regler aus dem Phasenvergleich des Taktsignals mit einem Spannungsverlauf des Umrichters 13 eine Signalspannung bewirkt, die die Frequenz der VCO ändert. Vorteilig ist dabei, dass die Software und/oder Hardware nicht wesentlich geändert werden muss und eine feinere Stufung vorsehbar ist.

Bei weiteren erfindungsgemäßen Ausführungsbeispielen wird die Synchronisierung der Einspeisungen verwendet, um die Ausgänge der Spannungs-Strom-Wandler parallel zusammenzuschalten zur Speisung nur eines gemeinsamen Streckenabschnittes.

### Bezugszeichenliste

1 Steuerschaltung
2 Leitung zur Übermittelung eines Taktsignals
3 Spannungszwischenkreisumrichter
4 Spannungs-Strom-Wandler
5 erster Streckenabschnitt
6 induktiv versorgbarer Verbraucher
7 Primärleiter
11 Steuerschaltung
13 Spannungszwischenkreisumrichter
14 Spannungs-Strom-Wandler
15 erster Streckenabschnitt
16 induktiv versorgbarer Verbraucher
17 Primärleiter

## Patentansprüche

1. Anlage zur berührungslosen Energieübertragung, umfassend Streckenabschnitte,
wobei jeder Streckenabschnitt (5, 15) eine Versorgungsleitung umfasst, in die ein mittelfrequenter Strom von einer dem jeweiligen Streckenabschnitt (5, 15) zugeordneten Einspeisung einspeisbar ist, wobei jede Einspeisung eine Steuerschaltung (1, 11) umfasst,
wobei eine erste der Steuerschaltungen (1) ein Taktsignal zum Synchronisieren der weiteren Einspeisungen an diese übermittelt,
wobei die Steuerschaltung (11) jeder weiteren Einspeisung Mittel zum Variieren einer Pulsweitenmodulationsperiode umfasst, wobei die Periodendauer abhängig von der Phasenabweichung des Taktsignals der ersten Einspeisung zum Pulsweitenmodulationssignal der weiteren Einspeisungen verändert wird,
wobei die Steuerschaltung (11) einer weiteren Einspeisung eine Oszillatorschaltung aufweist, welche einen Zähler taktet und somit dessen Zählerinhalt generiert,
**dadurch gekennzeichnet, dass**
abhängig von der Phasenabweichung des Taktsignals der ersten Einspeisung zum Pulsweitenmodulationssignal der weiteren Einspeisung die Periodendauer des zeitlichen Verlaufs des Zählerinhaltes verändert wird.

2. Anlage zur berührungslosen Energieübertragung, umfassend zumindest einen Streckenabschnitt (5, 15),
wobei der Streckenabschnitt (5, 15) eine Versorgungsleitung umfasst, in den ein mittelfrequenter Strom von mindestens zwei Einspeisungen einspeisbar ist,
wobei jede Einspeisung eine Steuerschaltung (1, 11) umfasst,
wobei eine erste der Steuerschaltungen (1) ein Taktsignal zum Synchronisieren der weiteren Einspeisungen an diese übermittelt,
wobei die Steuerschaltung (11) jeder weiteren Einspeisung Mittel zum Variieren einer Pulsweitenmodulationsperiode umfasst, wobei die Periodendauer abhängig von der Phasenabweichung des Taktsignals der ersten Einspeisung zum Pulsweitenmodulationssignal der weiteren Einspeisung verändert wird,
wobei die Steuerschaltung (11) einer weiteren Einspeisung eine Oszillatorschaltung aufweist, welche einen Zähler taktet und somit dessen Zählerinhalt generiert,
**dadurch gekennzeichnet, dass**
abhängig von der Phasenabweichung des Taktsignals der ersten Einspeisung zum Pulsweitenmodulationssignal die Periodendauer des zeitlichen Verlaufs des Zählerinhaltes der weiteren Einspeisung verändert wird.

3. Anlage nach mindestens einem der vorangegangenen Ansprüche,
**dadurch gekennzeichnet, dass**
die Steuerschaltung (1, 11) als digitales System ausgeführt ist
und/oder dass
die Synchronisierung nur auf Informationen basiert, die im digitalen Teil der Einspeisung vorhanden sind.

4. Anlage nach mindestens einem der vorangegangenen Ansprüche,
**dadurch gekennzeichnet, dass**
die Einspeisung eine pulsweitenmodulierbar betreibbare mittelfrequente Spannungsquelle umfasst, deren Ausgangsspannung einem Spannungs-Strom-Wandler (4, 14), insbesondere Gyrator, zuführbar ist, dessen Ausgangsstrom in die Versorgungsleitung einspeisbar ist.

5. Anlage nach mindestens einem der vorangegangenen Ansprüche,
**dadurch gekennzeichnet, dass** der Spannungs-Strom-Wandler (4, 14) und/oder die Induktivität der Versorgungsleitung mit zugeordneten Kapazitäten im Wesentlichen in Resonanz abgestimmt ist auf die Mittelfrequenz.

6. Anlage nach mindestens einem der vorangegangenen Ansprüche,
**dadurch gekennzeichnet, dass**
Verbraucher (6, 16) aus der Versorgungsleitung induktiv versorgbar sind, insbesondere die Verbraucher (6, 16) eine Sekundärspule umfassen, die induktiv an die als Primärleiter (7, 17) ausgeführte Versorgungsleitung ankoppelbar ist, insbesondere wobei der Sekundärspule eine Kapazität in Serie oder parallel derart geschaltet ist, die Resonanzfrequenz im Wesentlichen der Mittelfrequenz gleicht.

7. Anlage nach mindestens einem der vorangegangenen Ansprüche,
**dadurch gekennzeichnet, dass**
die Steuerschaltung (1, 11) zum Erzeugen der pulsweitenmodulierten Ansteuersignale für einen Umrichter vorgesehen ist.

8. Anlage nach mindestens einem der vorangegangenen Ansprüche,
**dadurch gekennzeichnet, dass**
der Änderungsbetrag der Pulsweitenmodulationsperiode pro Periode betragsmäßig unterhalb eines Wertes liegt, insbesondere zum Begrenzen der Frequenzabweichung von der Taktsignalfrequenz.

9. Anlage nach mindestens einem der vorangegangenen Ansprüche,
**dadurch gekennzeichnet, dass**
abhängig von der Phasenabweichung des Taktsignals der ersten Einspeisung zum Pulsweitenmodulationssignal die Ausgangsfrequenz einer Oszillatorschaltung der weiteren Einspeisung geändert wird, insbesondere zum Ändern der Grundtaktfrequenz für einen Mikrocontroller der weiteren Einspeisung.

10. Anlage nach mindestens einem der vorangegangenen Ansprüche,
**dadurch gekennzeichnet, dass**
das Taktsignal über ein Bussystem, insbesondere Feldbussystem und/oder Ethernet, übermittelt wird
und/oder dass mittels des Bussystems über das Taktsignal hinaus weitere Daten übertragbar sind.

11. Verfahren zum Betreiben einer Anlage **nach mindestens einem der vorangegangenen Ansprüche,**
**wobei** eine erste Einspeisung weiteren Einspeisungen ein Taktsignal übermittelt, wobei das Taktsignal in der ersten Einspeisung derart erzeugt wird, dass es synchron ist zu Ansteuersignalen einer **elektronische Leistungshalbleiter umfassenden Endstufe** der ersten Einspeisung zur Erzeugung einer ersten Ausgangsspannung (U1),
wobei das Taktsignal und die Schaltzeitpunkte der Ansteuersignale von demselben digitalen zeitbestimmenden Mittel, also Zähler, abgeleitet werden, **wobei zum Erreichen der Synchronisierung** zwischen der ersten Ausgangsspannung (U1) und einer zweiten Ausgangsspannung (U2) einer weiteren Einspeisung **ein Regler verwendet wird, wobei dem Regler eine Phasendifferenz zugeführt wird,** wobei die Steuerschaltung (11) jeder weiteren Einspeisung Mittel zum Variieren einer Pulsweitenmodulationsperiode umfasst, wobei die Periodendauer abhängig von der Phasenabweichung des Taktsignals der ersten Einspeisung zum Pulsweitenmodulationssignal verändert wird, wobei vom Ausgang des Reglers die Pulsweitenmodulationsperiode beeinflusst wird. **wobei vom Ausgang des Reglers die Pulsweitenmodulationsperiode beeinflusst** wird, und wobei die Steuerschaltung (11) einer weiteren Einspeisung eine Oszillatorschaltung aufweist, welche einen Zähler taktet und somit dessen Zählerinhalt generiert. **dadurch gekennzeichnet, dass** abhängig von der Phasenabweichung des Taktsignals der ersten Einspeisung zum Pulsweitenmodulationssignal der weiteren Einspeisungen die Periodendauer des zeitlichen Verlaufs des Zählerinhaltes verändert wird.

12. Verfahren nach Anspruch 11, **dadurch gekennzeichnet, dass** die weiteren Einspeisungen die Erzeugung von pulsweitenmodulierten Ansteuersignalen derart ausführen, dass eine Synchronisierung der Ansteuersignale, insbesondere Pulsweitenmodulationssignale, zum Taktsignal erreicht wird.

13. Verfahren nach Anspruch 11 oder 12, **dadurch gekennzeichnet, dass** vom Ausgang des Reglers die Frequenz einer Oszillatorschaltung beeinflusst wird.

14. Verfahren nach einem der Ansprüche 11 bis 13, **dadurch gekennzeichnet, dass** die Frequenzänderung oder Periodendaueränderung durch den Regler nur mit einer begrenzten maximalen Rate ausgeführt wird.

## Claims

1. System for contactless energy transmission, comprising path sections,
wherein each path section (5, 15) comprises a supply line, into which a medium-frequency current is feedable by an infeed assigned to the respective path section (5, 15),
wherein each infeed comprises a control circuit (1, 11),
wherein a first one of the control circuits (1) transmits a clock signal for synchronisation of the further infeeds thereto,
wherein the control circuit (11) of each further infeed comprises means for varying a pulse-width modulation period,
wherein the period duration is varied as a function of the phase deviation of the clock signal of the first infeed from the pulse-width modulation signal of the further infeeds,
wherein the control circuit (11) of a further infeed has an oscillator circuit which clocks a counter and thus generates its counter contents,
**characterised in that**
the period duration of the time characteristic of the counter contents is varied as a function of the phase deviation of the clock signal of the first infeed from the pulse-width modulation signal of the further infeed.

2. System for contactless energy transmission, comprising at least one path section (5, 15),
wherein the path section (5, 15) comprises a supply line, into which a medium-frequency current is feedable by at least two infeeds,
wherein each infeed comprises a control circuit (1, 11),
wherein a first one of the control circuits (1) transmits a clock signal for synchronisation of the further infeeds thereto,
wherein the control circuit (11) of each further infeed comprises means for varying a pulse-width modulation period,
wherein the period duration is varied as a function of the phase deviation of the clock signal of the first infeed from the pulse-width modulation signal of the further infeed,
wherein the control circuit (11) of a further infeed has an oscillator circuit which clocks a counter and thus generates its counter contents,
**characterised in that**
the period duration of the time characteristic of the counter contents of the further infeed is varied as a function of the phase deviation of the clock signal of the first infeed from the pulse-width modulation signal.

3. System according to at least one of the preceding claims,
**characterised in that**
the control circuit (1, 11) is implemented as a digital system and/or **in that**
the synchronisation is based only on information available in the digital component of the infeed.

4. System according to at least one of the preceding claims,
**characterised in that**
the infeed comprises a medium-frequency voltage source operable in a pulse-width-modulatable manner, whose output voltage is suppliable to a voltage-current converter (4, 14), in particular a gyrator, whose output current is feedable to the supply line.

5. System according to at least one of the preceding claims,
**characterised in that**
the voltage-current converter (4, 14) and/or the inductivity of the supply line with associated capacitances is substantially adapted in resonance to the medium frequency.

6. System according to at least one of the preceding claims,
**characterised in that**
consumers (6, 16) are inductively suppliable from the supply line, in particular the consumers (6, 16) comprise a secondary coil which is inductively couplable to the supply line implemented as primary conductor (7, 17), in particular
wherein a capacitance is connected to the secondary coil in series or in parallel such that the resonant frequency is substantially similar to the medium frequency.

7. System according to at least one of the preceding claims,
**characterised in that**
the control circuit (1, 11) is provided to generate the pulse-width-modulated control signals for a converter.

8. System according to at least one of the preceding claims,
**characterised in that**
the amount of change of the pulse-width modulation period per period is below a value, in particular for limiting the frequency deviation from the clock signal frequency.

9. System according to at least one of the preceding claims,
**characterised in that**
the output frequency of an oscillator circuit of the further infeed is varied as a function of the phase deviation of the clock signal of the first infeed from the pulse-width modulation signal, in particular for varying the basic clock frequency for a microcontroller of the further infeed.

10. System according to at least one of the preceding claims,
**characterised in that**
the clock signal is transmitted via a bus system, in particular field bus system and/or Ethernet
and/or **in that**, apart from the clock signal, further data is transmittable by means of the bus system.

11. Method for operating a system according to at least one of the preceding claims,
wherein a first infeed transmits a clock signal to further infeeds,
wherein the clock signal in the first infeed is generated such that it is synchronous with control signals of an output stage, comprising electronic power semiconductors, of the first infeed for generating a first output voltage (U1),
wherein the clock signal and the switching instants of the control signals are derived from the same digital, time-determining device, i.e. counter,
wherein a controller is used to achieve the synchronisation between the first output voltage (U1) and a second output voltage (U2) of a further infeed,
wherein the controller is supplied with a phase difference,
wherein the control circuit (11) of each further infeed comprises means for varying a pulse-width modulation period, wherein the period duration is varied as a function of the phase deviation of the clock signal of the first infeed from the pulse-width modulation signal, wherein the pulse-width modulation period is influenced by the output of the controller,
wherein the pulse-width modulation period is influenced by the output of the controller, and wherein the control circuit (11) of a further infeed has an oscillator circuit which clocks a counter and thus generates its counter contents,
**characterised in that** the period duration of the time characteristic of the counter contents is varied as a function of the phase deviation of the clock signal of the first infeed from the pulse-width modulation signal of the further infeeds.

12. Method according to Claim 11,
**characterised in that**
the further infeeds implement the generation of pulse-width-modulated control signals such that a synchronisation of the control signals, in particular pulse-width modulation signals, with the clock signal is achieved.

13. Method according to Claim 11 or 12,
**characterised in that**
the frequency of an oscillator circuit is influenced by the output of the controller.

14. Method according to one of Claims 11 to 13,
**characterised in that**
the frequency variation or period duration variation is implemented by the controller only at a limited maximum rate.

## Revendications

1. Installation de transmission d'énergie sans contact, comprenant des tronçons,
dans laquelle chaque tronçon (5, 15) comprend une ligne d'alimentation dans laquelle un courant à moyenne fréquence peut être injecté par une alimentation associée au tronçon (5, 15) respectif,
dans laquelle chaque alimentation comprend un circuit de commande (1, 11),
dans laquelle un premier des circuits de commande (1) transmet aux autres alimentations un signal d'horloge pour synchroniser celles-ci,
dans laquelle le circuit de commande (11) de chaque autre alimentation comprend des moyens pour faire varier une période de modulation de largeur d'impulsion, la durée de période étant modifiée en fonction de l'écart de phase du signal d'horloge de la première alimentation par rapport au signal de modulation de largeur d'impulsion des autres alimentations,
dans laquelle le circuit de commande (11) d'une autre alimentation présente un circuit oscillateur qui cadence un compteur et génère ainsi son contenu de compteur,
**caractérisée en ce que**
la durée de période de l'évolution dans le temps du contenu de compteur est modifiée en fonction de l'écart de phase du signal d'horloge de la première alimentation par rapport au signal de modulation de largeur d'impulsion de l'autre alimentation.

2. Installation de transmission d'énergie sans contact, comprenant au moins un tronçon (5, 15),
dans laquelle le tronçon (5, 15) comprend une ligne d'alimentation dans laquelle un courant à moyenne fréquence peut être injecté par au moins deux alimentations,
dans laquelle chaque alimentation comprend un circuit de commande (1, 11),
dans laquelle un premier des circuits de commande (1) transmet aux autres alimentations un signal d'horloge pour synchroniser celles-ci,
dans laquelle le circuit de commande (11) de chaque autre alimentation comprend des moyens pour faire varier une période de modulation de largeur d'impulsion, la durée de période étant modifiée en fonction de l'écart de phase du signal d'horloge de la première alimentation par rapport au signal de modulation de largeur d'impulsion de l'autre alimentation,
dans laquelle le circuit de commande (11) d'une autre alimentation présente un circuit oscillateur qui cadence un compteur et génère ainsi son contenu de compteur,
**caractérisée en ce que**
la durée de période de l'évolution dans le temps du contenu de compteur de l'autre alimentation est modifiée en fonction de l'écart de phase du signal d'horloge de la première alimentation par rapport au signal de modulation de largeur d'impulsion.

3. Installation selon au moins l'une des revendications précédentes,
**caractérisée en ce que**
le circuit de commande (1, 11) est réalisé sous la forme d'un système numérique et/ou que
la synchronisation est basée uniquement sur des informations qui sont disponibles dans la partie numérique de l'alimentation.

4. Installation selon au moins l'une des revendications précédentes,
**caractérisée en ce que**
l'alimentation comprend une source de tension à moyenne fréquence pouvant fonctionner par modulation de largeur d'impulsion, dont la tension de sortie peut être amenée à un convertisseur tension-courant (4, 14), en particulier un gyrateur, dont le courant de sortie peut être injecté dans la ligne d'alimentation.

5. Installation selon au moins l'une des revendications précédentes,
**caractérisée en ce que**
le convertisseur tension-courant (4, 14) et/ou l'inductance de la ligne d'alimentation est accordé(e) sensiblement en résonance sur la moyenne fréquence à l'aide de capacités associées.

6. Installation selon au moins l'une des revendications précédentes,
**caractérisée en ce que**
des consommateurs (6, 16) peuvent être alimentés par induction à partir de la ligne d'alimentation, les consommateurs (6, 16) comprenant en particulier une bobine secondaire qui peut être couplée par induction à la ligne d'alimentation réalisée sous la forme d'un conducteur primaire (7, 17), une capacité étant en particulier branchée en série ou en parallèle avec la bobine secondaire de façon que la fréquence de résonance corresponde sensiblement à la moyenne fréquence.

7. Installation selon au moins l'une des revendications précédentes,
**caractérisée en ce que**
le circuit de commande (1, 11) est conçu pour produire les signaux de commande modulés en largeur d'impulsion pour un convertisseur.

8. Installation selon au moins l'une des revendications précédentes,
**caractérisée en ce que**
le montant de modification de la période de modulation de largeur d'impulsion par période est inférieur en valeur absolue à une certaine valeur, en particulier pour limiter l'écart de fréquence par rapport à la fréquence du signal d'horloge.

9. Installation selon au moins l'une des revendications précédentes,
**caractérisée en ce que**
la fréquence de sortie d'un circuit oscillateur de l'autre alimentation est modifiée en fonction de l'écart de phase du signal d'horloge de la première alimentation par rapport au signal de modulation de largeur d'impulsion, en particulier pour modifier la fréquence d'horloge de base pour un microcontrôleur de l'autre alimentation.

10. Installation selon au moins l'une des revendications précédentes,
**caractérisée en ce que**
le signal d'horloge est transmis par un système de bus, en particulier un système de bus de terrain et/ou Ethernet,
et/ou qu'au-delà du signal d'horloge, d'autres données peuvent être transmises au moyen du système de bus.

11. Procédé de fonctionnement d'une installation selon au moins l'une des revendications précédentes,
selon lequel une première alimentation transmet un signal d'horloge à d'autres alimentations,
selon lequel le signal d'horloge est produit dans la première alimentation de façon à être synchrone avec des signaux de commande d'un étage final de la première alimentation comprenant des semi-conducteurs électroniques de puissance pour produire une première tension de sortie (U1),
selon lequel le signal d'horloge et les points de commutation des signaux de commande sont dérivés du même moyen numérique de détermination du temps, à savoir du même compteur,
selon lequel un régulateur est utilisé pour atteindre la synchronisation entre la première tension de sortie (U1) et une deuxième tension de sortie (U2) d'une autre alimentation,
selon lequel une différence de phase est amenée au régulateur,
selon lequel le circuit de commande (11) de chaque autre alimentation comprend des moyens pour faire varier une période de modulation de largeur d'impulsion, la durée de période étant modifiée en fonction de l'écart de phase du signal d'horloge de la première alimentation par rapport au signal de modulation de largeur d'impulsion, la période de modulation de largeur d'impulsion étant influencée par la sortie du régulateur,
selon lequel la période de modulation de largeur d'impulsion est influencée par la sortie du régulateur, et selon lequel le circuit de commande (11) d'une autre alimentation présente un circuit oscillateur qui cadence un compteur et génère par conséquent son contenu de compteur,
**caractérisé en ce que**
la durée de période de l'évolution dans le temps du contenu de compteur est modifiée en fonction de l'écart de phase du signal d'horloge de la première alimentation par rapport au signal de modulation de largeur d'impulsion des autres alimentations.

12. Procédé selon la revendication 11,
**caractérisé en ce que**
les autres alimentations réalisent la production de signaux de commande modulés en largeur d'impulsion de façon à atteindre une synchronisation des signaux de commande, en particulier des signaux de modulation de largeur d'impulsion, avec le signal d'horloge.

13. Procédé selon la revendication 11 ou 12,
**caractérisé en ce que**
la fréquence d'un circuit oscillateur est influencée par la sortie du régulateur.

14. Procédé selon l'une des revendications 11 à 13,
**caractérisé en ce que**
la modification de fréquence ou la modification de durée de période par le régulateur n'est réalisée qu'à une cadence maximale limitée.
